# EUROPEAN PATENT SPECIFICATION

(11) **EP 4 597 978 B1**
(45) Date of publication and mention of the grant of the patent: **18.11.2026**
(21) Application number: 23876259.5
(22) Date of filing: 30.06.2023
(51) Int. Cl.: H04L 47/125, H04L 45/24, H04L 69/14, H04L 67/141

(54) **METHOD AND APPARATUS FOR PERFORMING DATA TRANSMISSION**
VERFAHREN UND VORRICHTUNG ZUR DATENÜBERTRAGUNG
PROCÉDÉ ET APPAREIL DE TRANSMISSION DE DONNÉES

(30) Priority: 14.10.2022 CN 202211262656; 30.12.2022 CN 202211734961
(43) Date of publication of application: 06.08.2025
(73) Proprietor: Huawei Cloud Computing Technologies Co., Ltd., Guiyang, Guizhou, 550025 (CN)
(72) Inventor: GUO, Hongge, Guiyang, Guizhou 550025 (CN); ZHOU, Sumin, Guiyang, Guizhou 550025 (CN)
(74) Representative: Körber, Martin Hans
(86) International application number: PCT/CN2023/104842
(87) International publication number: WO 2024/078050

(56) References cited:
- WO-A1-2020/063086
- WO-A1-2020/119328
- WO-A1-2022/177657
- CN-A- 115 002 238
- CN-A- 115 002 238
- US-A1- 2019 327 112
- US-A1- 2020 344 189

## Description

### TECHNICAL FIELD

This application relates to the field of internet of things technologies, and in particular, to a data transmission method and an apparatus.

### BACKGROUND

In an internet of things system, it is often necessary to connect various internet of things devices. However, some internet of things devices lacking a network communication capability need to access an internet of things platform via an edge gateway.

With the enhancement of a computing capability of the edge gateway, a single edge gateway may be accessed by a large quantity of internet of things devices. In this case, a communication link between the edge gateway and the internet of things platform needs to carry a large amount of internet of things device data. This may cause congestion on the communication link.

Patent publication US 2020/344189 A1 is about using the message queue telemetry (MQTT) protocol for Internet of Things, and patent publication CN115002238A is about traffic management for Internet of Things.

### SUMMARY

The present application provides a data transmission method and an apparatus, to avoid congestion on a communication link between an edge gateway and an internet of things platform. The technical solutions are as follows.

According to a first aspect, a data transmission method is provided. The method is applied to an edge gateway, and the method includes: establishing a first communication link with an internet of things platform; sending a multi-link access request to the internet of things platform over the first communication link, where the multi-link access request carries a first quantity of internet of things devices accessing the edge gateway; receiving link establishment information that is sent by the internet of things platform and that corresponds to at least one second communication link; establishing the at least one second communication link with the internet of things platform based on the link establishment information corresponding to the at least one second communication link; and performing data transmission with the internet of things platform over the first communication link and the second communication link.

In the solution shown in this application, the edge gateway may first establish the first communication link with the internet of things platform, and then send the multi-link access request to the internet of things platform over the first communication link, to subsequently establish the at least one second communication link with the internet of things platform. In this way, data may be transmitted between the edge gateway and the internet of things platform over a plurality of communication links (the first communication link and the at least one second communication link), so that a probability of congestion on the communication link can be reduced.

In an implementation, the establishing the at least one second communication link with the internet of things platform based on the link establishment information corresponding to the at least one second communication link includes: sending, to the internet of things platform based on the link establishment information corresponding to the at least one second communication link, a link establishment request respectively corresponding to the at least one second communication link, where the link establishment request carries a gateway identifier of the edge gateway, the gateway identifier is different from a gateway identifier used by the edge gateway to establish the first communication link, and when there are a plurality of link establishment requests, each link establishment request carries a different gateway identifier.

In the solution shown in this application, the edge gateway may generate a plurality of different gateway identifiers based on the gateway identifier of the edge gateway, and gateway identifiers carried in link establishment requests that are sent by the edge gateway to the internet of things platform and that correspond to the second communication links are different. In this way, the plurality of communication links can be established with the internet of things platform based on different gateway identifiers, so that a probability of congestion on the communication link can be reduced.

In an implementation, the link establishment information includes a private port number of a service instance corresponding to the second communication link. The establishing the at least one second communication link with the internet of things platform based on the link establishment information corresponding to the at least one second communication link includes: sending, to the internet of things platform, the link establishment request respectively corresponding to the at least one second communication link, where the link establishment request carries the private port number corresponding to the second communication link.

In the solution shown in this application, a port number corresponding to the service instance is the private port number. In this way, the internet of things platform can establish the second communication link with a specified service instance based on the private port number, so that load balancing of the service instance can be implemented.

In an implementation, the performing data transmission with the internet of things platform over the first communication link and the second communication link includes: selecting a target communication link from the first communication link and the second communication link according to a specified communication link selection policy each time data needs to be sent to the internet of things platform; and sending the data over the target communication link.

In the solution shown in this application, the edge gateway may select, from the first communication link and the second communication link according to the communication link selection policy, the target communication link for sending the data to the internet of things platform. In this way, data originally sent by one communication link can be sequentially shared to different communication links for sending, so that a probability of congestion on the communication link can be reduced.

In an implementation, the communication link selection policy includes random selection or sequential selection.

In an implementation, the multi-link access request further carries a communication frequency of the internet of things device.

In the solution shown in this application, the multi-link access request sent by the edge gateway to the internet of things platform may further include the communication frequency. In this way, a service instance on the internet of things platform may determine, based on the first quantity of internet of things devices accessing the edge gateway and the communication frequency of the internet of things device, an amount of data for communication between the edge gateway and the internet of things platform, and the internet of things platform may determine, based on the amount of data, a quantity of second communication links to be established with the edge gateway. In this way, dynamic allocation of the communication links can be implemented, and a probability of congestion on the communication links between the edge gateway and the internet of things platform can be reduced.

According to a second aspect, a data transmission method is provided. The method is applied to an internet of things platform, and the method includes: receiving a multi-link access request sent by an edge gateway over a first communication link, where the multi-link access request carries a first quantity of internet of things devices accessing the edge gateway; determining, based on the first quantity, a second quantity of second communication links to be established with the edge gateway; obtaining link establishment information corresponding to the second quantity of second communication links; sending, to the edge gateway, the link establishment information corresponding to the second quantity of second communication links, where the link establishment information indicates the edge gateway to establish the second quantity of second communication links with the internet of things platform; and performing data transmission with the edge gateway over the first communication link and the second communication link.

In the solution shown in this application, after establishing the first communication link with the edge gateway, the internet of things platform may receive the multi-link access request that is sent by the edge gateway over the first communication link and that carries the first quantity of internet of things devices accessing the edge gateway. Then, the internet of things platform may determine, based on the first quantity of internet of things devices of the edge gateway, the second quantity of second communication links to be established with the edge gateway, and then send, to the edge gateway, the link establishment information corresponding to the second quantity of second communication links, to subsequently establish the second quantity of second communication links with the edge gateway. In this way, data may be transmitted between the internet of things platform and the edge gateway over a plurality of communication links (the first communication link and at least one second communication link), so that a probability of congestion on the communication link can be reduced.

In an implementation, the determining, based on the first quantity, a second quantity of second communication links to be established with the edge gateway includes: determining, based on a first correspondence, the second quantity that corresponds to the first quantity and that is of the second communication links to be established with the edge gateway.

In the solution shown in this application, a correspondence between the first quantity of internet of things devices accessing the edge gateway and the second quantity of communication links subsequently established between the internet of things platform and the edge gateway may be set on the internet of things platform. In the correspondence, the first quantity is positively correlated with the second quantity. To be specific, a larger quantity of internet of things devices accessing the edge gateway indicates a larger quantity of communication links established between the edge gateway and the internet of things platform. In this way, a quantity of communication links established between the edge gateway and the internet of things platform can be dynamically determined based on the first quantity of internet of things devices accessing the edge gateway, thereby avoiding a waste of resources.

In an implementation, the multi-link access request further carries a communication frequency of the internet of things device accessing the edge gateway. The determining, based on the first quantity, a second quantity of second communication links to be established with the edge gateway includes: determining, based on the first quantity and the communication frequency, the second quantity of second communication links to be established with the edge gateway.

In an implementation, the determining, based on the first quantity and the communication frequency, the second quantity of second communication links to be established with the edge gateway includes: determining a product of the first quantity and the communication frequency; and determining, based on a second correspondence, the second quantity that corresponds to the product and that is of the second communication links to be established with the edge gateway.

In the solution shown in this application, the multi-link access request sent by the edge gateway to the internet of things platform may further include the communication frequency. In this way, a service instance on the internet of things platform may determine, based on the first quantity of internet of things devices accessing the edge gateway and the communication frequency of the internet of things device, an amount of data for communication between the edge gateway and the internet of things platform, and the internet of things platform may determine, based on the amount of data, a quantity of second communication links to be established with the edge gateway. In this way, dynamic allocation of communication links can be implemented, a probability of congestion on the communication link between the edge gateway and the internet of things platform can be reduced, and a waste of resources can be avoided.

In an implementation, the obtaining link establishment information corresponding to the second quantity of second communication links includes: determining, from service instances other than a service instance corresponding to the first communication link, service instances of the second quantity with least corresponding load; and obtaining link establishment information respectively corresponding to the second quantity of service instances.

In the solution shown in this application, when a plurality of service instances for which the edge gateway establishes a link are determined, the second quantity of service instances with least corresponding load may be determined as a service instance for establishing the second communication link with the edge gateway. In this way, load balancing between the service instances can be implemented.

In an implementation, the link establishment information includes a private port number corresponding to a service instance. Before the performing data transmission with the edge gateway over the first communication link and the second communication link, the method further includes: receiving a link establishment request that is sent by the edge gateway and that carries a private port number; and establishing a second communication link between the edge gateway and a service instance corresponding to the private port number.

In the solution shown in this application, a port number corresponding to the service instance may be set to the private port number. In this way, the internet of things platform can establish the second communication link between the edge gateway and a specified service instance based on the private port number carried in the link establishment information sent by the edge gateway, so that load balancing of the service instance can be implemented.

In an implementation, the performing data transmission with the edge gateway over the first communication link and the second communication link includes: selecting a target communication link from the first communication link and the second communication link according to a specified communication link selection policy each time data needs to be sent to the edge gateway; and sending the data over the target communication link.

In an implementation, the communication link selection policy includes random selection or sequential selection.

In the solution shown in this application, the internet of things platform may select, from the first communication link and the second communication link according to the communication link selection policy, the target communication link for sending the data to the edge gateway. In this way, data originally sent by one communication link can be sequentially shared to different communication links for sending, so that a probability of congestion on the communication link can be reduced.

According to a third aspect, a data transmission apparatus is provided. The apparatus includes at least one module. The at least one module is configured to implement the data transmission method provided in any one of the first aspect or the implementations of the first aspect.

According to a fourth aspect, a data transmission apparatus is provided. The apparatus includes at least one module. The at least one module is configured to implement the data transmission method provided in any one of the second aspect or the implementations of the second aspect.

According to a fifth aspect, a data transmission system is provided. The system includes an edge gateway and an internet of things platform. The edge gateway is configured to implement the data transmission method provided in any one of the first aspect or the implementations of the first aspect. The internet of things platform implements the data transmission method provided in any one of the second aspect or the implementations of the second aspect.

According to a sixth aspect, an edge gateway is provided. The edge gateway includes a processor and a memory. The memory stores at least one instruction. The at least one instruction is loaded and executed by the processor to implement the data transmission method provided in any one of the first aspect or the examples of the first aspect.

According to a seventh aspect, a computing device cluster is provided, and includes at least one computing device. Each computing device includes a processor and a memory. The processor of the at least one computing device is configured to execute instructions stored in the memory of the at least one computing device, to enable the computing device cluster to perform the data transmission method provided in any one of the second aspect or the examples of the second aspect.

According to an eighth aspect, a computer program product including instructions is provided. When the instructions are run by an edge gateway, the edge gateway is enabled to perform the data transmission method provided in any one of the first aspect or the examples of the first aspect.

According to a ninth aspect, a computer program product including instructions is provided. When the instructions are run by a computing device cluster, the computing device cluster is enabled to perform the data transmission method provided in any one of the second aspect or the examples of the second aspect.

According to a tenth aspect, a computer-readable storage medium is provided, and includes computer program instructions. When the computer program instructions are executed by an edge gateway, the edge gateway performs the data transmission method provided in any one of the first aspect or the examples of the first aspect.

According to an eleventh aspect, a computer-readable storage medium is provided, and includes computer program instructions. When the computer program instructions are executed by a computing device cluster, the computing device cluster performs the data transmission method provided in the second aspect or any one of the examples of the second aspect.

### BRIEF DESCRIPTION OF DRAWINGS

FIG. 1 is a diagram of a system architecture of an internet of things system according to this application;
FIG. 2 is a flowchart of a data transmission method according to this application;
FIG. 3 is a flowchart of a data transmission method according to this application;
FIG. 4A and FIG. 4B are a flowchart of a method for establishing a plurality of links between an edge gateway and a server according to this application;
FIG. 5 is a flowchart of a method for reporting data by an edge gateway according to this application;
FIG. 6 is a flowchart of a method for sending a message to an edge network by an internet of things platform according to this application;
FIG. 7 is a flowchart of a method for disconnecting a connection to an edge gateway in a multi-link mode according to this application;
FIG. 8 is a diagram of a structure of a data transmission apparatus according to this application;
FIG. 9 is a diagram of a structure of a data transmission apparatus according to this application;
FIG. 10 is a diagram of a computing device according to this application;
FIG. 11 is a diagram of a computing device cluster according to this application; and
FIG. 12 is a connection diagram of a computing device according to this application.

### DESCRIPTION OF EMBODIMENTS

To make the objectives, technical solutions, and advantages of this application clearer, the following further describes implementations of this application in detail with reference to the accompanying drawings.

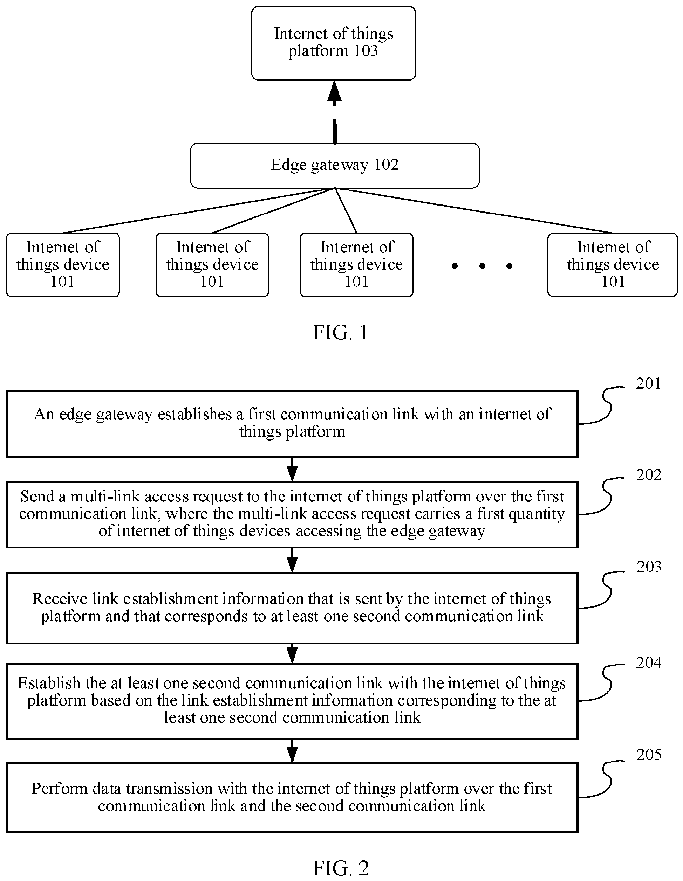

FIG. 1 is a diagram of a system architecture of an internet of things system according to this application. Refer to FIG. 1. The internet of things system includes internet of things devices 101, an edge gateway 102, and an internet of things platform 103.

The internet of things devices 101 may be various smart homes (such as smart refrigerators and smart air conditioners), various industrial devices (such as smart water meters and smart electricity meters), various intelligent sensors (such as smoke sensors and temperature and humidity sensors), or the like. The edge gateway 102 has a function like data exchange, and may be a router, a switch, or the like. The internet of things platform 103 may be an internet of things server. The internet of things server may be an independent server, or a server cluster. One or more internet of things devices 101 may access the edge gateway 102, and may establish a communication link with the internet of things platform 103 via the edge gateway 102, to perform data transmission.

A plurality of service instances are disposed in the internet of things platform 103, and each of the service instances may be a program set that is run in a server and that can independently provide a service for the internet of things device. The plurality of service instances include at least a load balancing service, an access service, and a service processing service. In related technologies, the edge gateway may first send a link establishment request to the load balancing service, and the load balancing service may be one access service selected from a plurality of access services, to establish, with the edge gateway, a communication link for data transmission.

After the edge gateway establishes the communication link with the access service on the internet of things platform, the internet of things device accessing the edge gateway may send data (for example, collected industrial data) to the access service on the internet of things platform over the communication link. After receiving the data sent by the internet of things device, the access service may forward corresponding data to a corresponding service processing service, and the corresponding service processing service processes the data. The service processing service may alternatively send data (for example, a control instruction for an industrial device) to the edge gateway by using the access service.

With the enhancement of a computing capability of the edge gateway, a single edge gateway may be accessed by a large quantity of internet of things devices. In this case, data transmission is performed between the edge gateway and the internet of things platform over only one communication link. This may cause congestion on the communication link.

This application provides a data transmission method, to avoid congestion on a transmission link between an edge gateway and an internet of things platform. The following describes the data transmission method provided in this application with reference to the accompanying drawings.

FIG. 2 shows a data transmission method according to this application. The method may be applied to an edge gateway. Refer to FIG. 2. The method includes the following steps.

Step 201: The edge gateway establishes a first communication link with an internet of things platform.

The first communication link is a 1^{st} communication link established between the edge gateway and a service instance corresponding to an access service on the internet of things platform. For establishment of the first communication link, refer to conventional technologies. Details are not described herein. The service instance accessing the edge gateway over the first communication link may be subsequently referred to as a first service instance.

Step 202: Send a multi-link access request to the internet of things platform over the first communication link, where the multi-link access request carries a first quantity of internet of things devices accessing the edge gateway.

After establishing the first communication link with the service instance on the internet of things platform, if determining that a multi-link establishment condition is currently met, the edge gateway may send, over the first communication link, the multi-link access request to the first service instance connected to the first communication link. The multi-link establishment condition may be that the first quantity of internet of things devices accessing the edge gateway is greater than a specified threshold of a quantity of internet of things devices.

The multi-link access request sent to the internet of things platform carries the first quantity of internet of things devices accessing the edge gateway, so that the internet of things platform determines, based on the first quantity of internet of things devices accessing the edge gateway, a second quantity of second communication links to be established subsequently with the edge gateway. The second communication link is a communication link established between the edge gateway and a service instance other than the first service instance on the internet of things platform. The service instance accessing the edge gateway over the second communication link may be subsequently referred to as a second service instance.

The multi-link access request sent to the internet of things platform may further carry a communication frequency of the internet of things device. The communication frequency is a frequency at which the internet of things device transmits data to the internet of things platform. The internet of things platform may determine, based on the first quantity of internet of things devices accessing the edge gateway and the communication frequency of the internet of things device, a quantity of second communication links to be established subsequently with the edge gateway.

Step 203: Receive link establishment information that is sent by the internet of things platform and that corresponds to at least one second communication link.

After receiving the multi-link access request sent by the edge gateway, the service instance that corresponds to the first communication link and that is on the internet of things platform may determine, based on the multi-link access request, the link establishment information corresponding to the at least one second communication link, and return the link establishment information to the edge gateway. A quantity of second communication links is the same as a quantity of second service instances.

Step 204: Establish the at least one second communication link with the internet of things platform based on the link establishment information corresponding to the at least one second communication link.

After receiving the link establishment information corresponding to the at least one second communication link, the edge gateway may send a link establishment request to the internet of things platform based on link establishment information corresponding to each second communication link, to establish a communication link with the second service instance on the internet of things platform.

In an example, gateway identifiers carried in a plurality of link establishment requests sent by the edge gateway to the internet of things platform are different. The plurality of gateway identifiers each are a gateway identifier corresponding to the edge gateway. The plurality of link establishment requests include a link establishment request sent when the edge gateway establishes the first communication link with the internet of things platform and a link establishment request sent when the edge gateway establishes the second communication link with the internet of things platform. For example, the edge gateway may generate different gateway identifiers based on an original gateway identifier of the edge gateway and a quantity of times of sending a link establishment request to the internet of things platform currently.

For example, the gateway identifier of the edge gateway is GW001. When the edge gateway sends a link establishment request to the internet of things platform for the first time, a gateway identifier carried in the link establishment request is GW001-1. When the edge gateway sends a link establishment request to the internet of things platform for the second time, a gateway identifier carried in the link establishment request is GW001-2. When the edge gateway sends a link establishment request to the internet of things platform for the N^{th} time, a gateway identifier carried in the link establishment request is GW001-N. In this way, link establishment requests that are separately received by the internet of things platform and that carry different gateway identifiers may be considered as being sent by different edge gateways, so that the plurality of link establishment requests can be prevented from being processed as a same link establishment request because the gateway identifiers carried in the plurality of link establishment requests are the same. The internet of things platform may separately verify different link establishment requests, to establish a plurality of second communication links with the edge gateway.

In addition, the link establishment information corresponding to the second communication link further includes a port number of the second service instance. In an example, the port number of the second service instance is a private port number. In this way, the link establishment request sent by the edge gateway to the internet of things platform may carry the private port number corresponding to the second service instance, to establish the second communication link with the specified second service instance on the internet of things platform.

Step 205: Perform data transmission with the internet of things platform over the first communication link and the second communication link.

After establishing the first communication link and the second communication link with the internet of things platform, the edge gateway may perform data transmission with the internet of things platform over the first communication link and the second communication link.

Each time the edge gateway needs to send data to the internet of things platform, the edge gateway may select a target communication link from the first communication link and the second communication link according to a specified communication link selection policy, and send the data to the internet of things platform over the selected target communication link. The communication link selection policy includes random selection or sequential selection. In addition, when disconnecting the communication link from the internet of things platform, the edge gateway may send a link disconnection notification to the internet of things platform for a plurality of communication links (the first communication link and the second communication link) established with the internet of things platform, to disconnect the plurality of communication links established with the internet of things platform.

According to this embodiment provided in this application, the plurality of communication links may be established between the edge gateway and the internet of things platform for data transmission, and each communication link may be used for data transmission with a different service instance on the internet of things platform. In this way, a communication link between the edge gateway and the internet of things platform is increased, thereby reducing pressure of data transmission over each communication link, and reducing a probability of congestion on the communication link.

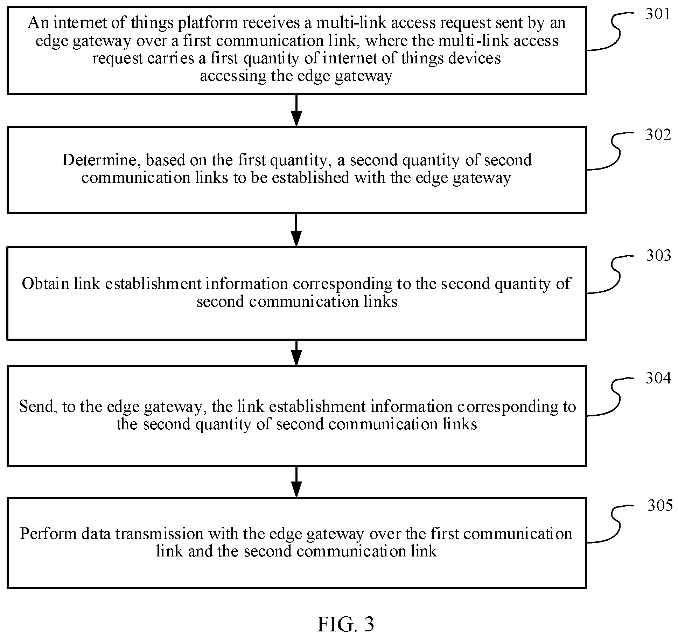

FIG. 3 shows a data transmission method according to this application. The method may be applied to an internet of things platform. Refer to FIG. 3, the method includes the following steps.

Step 301: The internet of things platform receives a multi-link access request sent by an edge gateway over a first communication link, where the multi-link access request carries a first quantity of internet of things devices accessing the edge gateway.

The first communication link is a 1^{st} communication link established between the edge gateway and a service instance on the internet of things platform. For establishment of the first communication link, refer to conventional technologies. Details are not described herein. The service instance accessing the edge gateway over the first communication link may be subsequently referred to as a first service instance. Before step 301 is performed, the first communication link may be first established between the edge gateway and the first service instance in the internet of things platform.

Step 302: Determine, based on the first quantity, a second quantity of second communication links to be established with the edge gateway.

When the multi-link access request sent by the edge gateway carries the first quantity of internet of things devices accessing the edge gateway, the first service instance may determine, based on the first quantity of internet of things devices accessing the edge gateway, the second quantity of communication links subsequently established by the internet of things platform with the edge gateway. The communication link subsequently established by the internet of things platform with the edge gateway may be referred to as a second communication link.

In an example, the internet of things platform may store a first correspondence between a quantity of internet of things devices and a quantity of communication links. For the second quantity of communication links subsequently established by the internet of things platform with the edge gateway, the first service instance may determine, by searching for the first correspondence, the second quantity that corresponds to the first quantity and that is of the second communication links to be established with the edge gateway.

In another example, the multi-link access request further carries a communication frequency of the internet of things device accessing the edge gateway, and the communication frequency is a frequency at which the internet of things device transmits data to the internet of things platform. The first service instance may calculate a product of the communication frequency and the first quantity, to obtain a total communication frequency corresponding to the edge gateway. The internet of things platform may store a second correspondence between the communication frequency of the edge gateway and a quantity of communication links. The first service instance may determine, by searching for the second correspondence, the second quantity that corresponds to the total communication frequency and that is of the second communication links to be established with the edge gateway.

Step 303: Obtain link establishment information corresponding to the second quantity of second communication links.

After determining the second quantity of second communication links to be established with the edge gateway, the first service instance may obtain the link establishment information corresponding to the second quantity of second communication links.

The link establishment information corresponding to the second communication link may be link establishment information corresponding to a service instance other than the first service instance on the internet of things platform, and the service instance is a service instance corresponding to an access service. The service instance may be referred to as a second service instance. The link establishment information corresponding to the second communication link may include a port number corresponding to the second service instance.

In an example, the port number corresponding to the second service instance may be a private port number. In this way, after receiving the link establishment information, the edge gateway may send a link establishment request carrying the private port number included in the link establishment information to a load balancing service of the internet of things platform. The load balancing service may send, based on the private port number carried in the link establishment request, the corresponding link establishment request to the second service instance corresponding to the private port number, to establish the second communication link between the edge gateway and the second service instance.

In an example, the second quantity of second service instances may be a second quantity of service instances with least corresponding load other than the first service instance in the internet of things platform.

After determining the second quantity of second communication links to be established subsequently with the edge gateway, the first service instance may obtain load information corresponding to each second service instance, determine, from a plurality of second service instances based on the load information, service instances of the second quantity with least corresponding load, and then determine the second quantity of service instances with least load as service instances that provide access services for the edge gateway.

Step 304: Send the link establishment information corresponding to the second quantity of second communication links to the edge gateway.

Step 305: Perform data transmission with the edge gateway over the first communication link and the second communication link.

After the edge gateway establishes the first communication link and the second communication link with the internet of things platform, the internet of things platform may perform data transmission with the edge gateway over the first communication link and the second communication link.

Each time the internet of things platform needs to send data to the edge gateway, the internet of things platform may select a target communication link from the first communication link and the second communication link according to a specified communication link selection policy, and send the data to the edge gateway over the selected target communication link. The communication link selection policy includes random selection or sequential selection.

According to this embodiment provided in this application, the plurality of communication links may be established between the edge gateway and the internet of things platform for data transmission, and each communication link may be used for data transmission with a different service instance on the internet of things platform. In this way, a communication link between the edge gateway and the internet of things platform is increased, thereby reducing pressure of data transmission over each communication link, and reducing a probability of congestion on the communication link.

In this application, a communication link may be established between the edge gateway and the service instance on the internet of things platform according to an message queue telemetry transport (message queue telemetry transport, MQTT) protocol. A plurality of ports in the internet of things platform are opened for an MQTTinterface used for accessing the edge gateway, and configuration of a routing distribution policy for a port is completed on a load balancing (load balancing, LB) service. The configuration of the routing distribution policy is as follows.

For one well-known port (for example, 8883), that is, a well-known port of an MQTT interface provided externally, the edge gateway may initially access the LB of the internet of things platform through the well-known port. The routing distribution policy configured on the LB is: When a link establishment request carrying a well-known port number is received, corresponding link establishment requests are distributed in an access service cluster at a backend of the internet of things platform in a polling mode.

For a plurality of private ports (for example, 8981, 8982, 8983, and so on), a quantity of private ports is consistent with a quantity of access services at the backend of the internet of things platform. The routing distribution policy configured on the LB is: When a link establishment request carrying a private port number is received, the corresponding link establishment request is sent to the access service corresponding to the private port number.

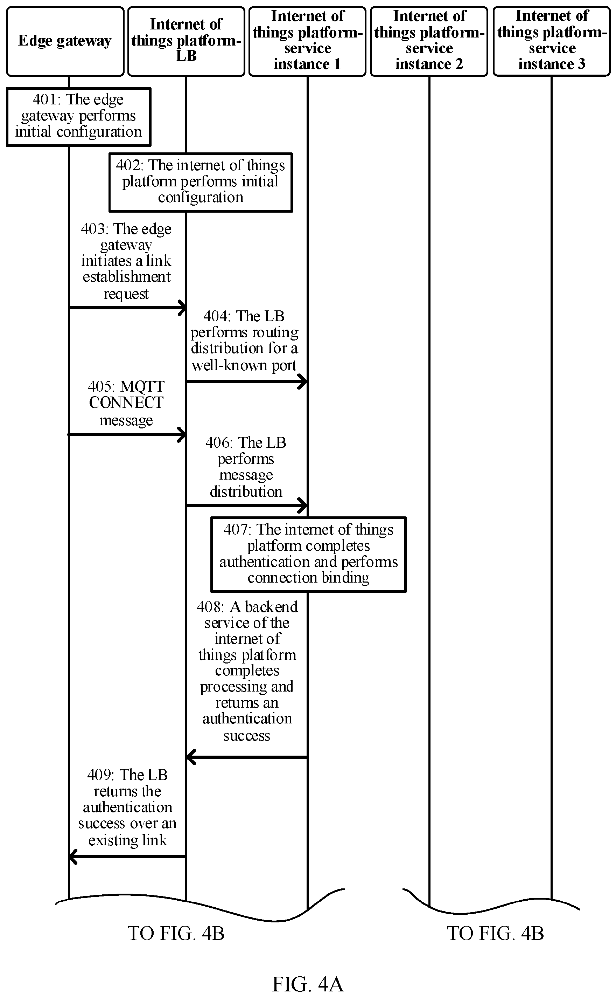

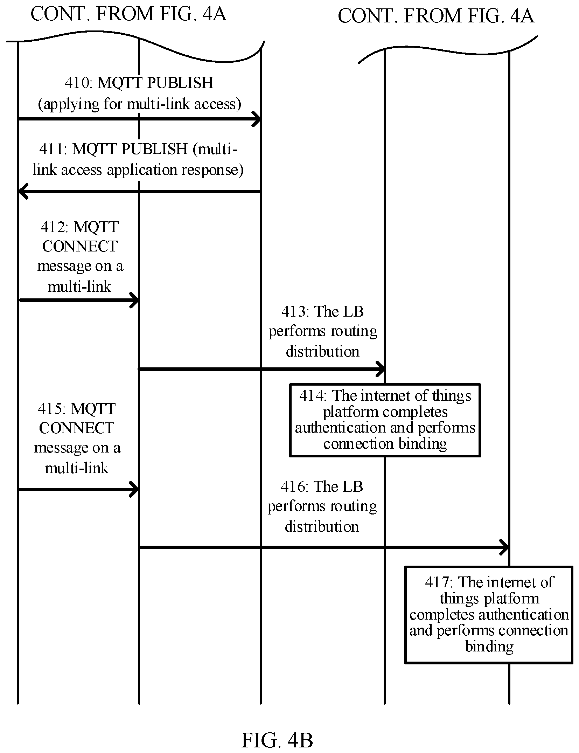

FIG. 4A and FIG. 4B are a flowchart of a method for establishing a plurality of communication links between an edge gateway and an internet of things platform according to this application. Refer to FIG. 4A and FIG. 4B, the method includes the following steps.

Step 401: The edge gateway performs initial configuration. The edge gateway completes configuration of a key parameter. The key parameter includes a user name (user name) and a password (password) that are used on the internet of things platform for authentication, and a server address and a well-known port number of a load service on the internet of things platform.

Step 402: The internet of things platform performs initial configuration. The internet of things platform completes configuration of a routing distribution policy for load balancing based on a service deployment status of the internet of things platform.

Step 403: The edge gateway initiates a link establishment request. The edge gateway sends the link establishment request to the LB based on the server address and a well-known port of the load service, to complete link establishment with the load service.

Step 404: The LB performs routing distribution for the well-known port number carried in the link establishment request. The LB performs distribution for the well-known port according to a polling policy, and selects a first service instance (for example, a service instance 1) from an access service cluster at a backend, to complete link establishment between the LB and the first service instance.

Step 405: The edge gateway sends an MQTT CONNECT message to the LB. The edge gateway sends the MQTT CONNECT message to the internet of things platform through a standard MQTT interface. The MQTT CONNECT message carries basic identity information (a device Id) of the edge gateway and authentication information (a user name and a password) of the edge gateway.

Step 406: The LB performs message distribution. The LB sends the MQTT CONNECT message to the first service instance over a link established with the first service instance.

Step 407: The first service instance completes authentication and performs connection binding. The first service instance performs authentication on the authentication information carried in the MQTT CONNECT message, and performs connection binding. The first service instance is bound to the edge gateway as an available route.

Step 408: The first service instance returns an authentication success.

Step 409: The LB returns, over the link that is already established with the edge gateway, the authentication success. In this case, a first communication link is successfully established between the edge gateway and the first service instance.

Step 410: The edge gateway sends an MQTT PUBLISH message (that is, a multi-link access request) to the first service instance: The edge gateway determines, based on a quantity of subdevices accessing the edge gateway, whether to send the MQTT PUBLISH message to the first service instance. If the quantity of subdevices accessing the edge gateway exceeds a specified quantity threshold, it may be considered that the edge gateway is a large gateway, and multi-link access may be applied for to the internet of things platform.

An example of the MQTT PUBLISH message is as follows:
topic: $oc/devices/{device Id}/sys/links/request;
payload: {"devices_number": 10000, "Frequency": 60}
device Id is an identifier of the edge gateway, devices_number is the quantity of subdevices accessing the edge gateway, and Frequency is a communication frequency of the subdevice.

Step 411: The first service instance responds to the MQTT PUBLISH message. The first service instance determines, based on the quantity of subdevices that is carried in the MQTT PUBLISH and message the communication frequency, a second quantity of communication links to be established subsequently with the edge gateway; determines external link establishment information of a second quantity of second service instances based on a current actual load status of another service instance; and sends the link establishment information to the edge gateway via an MQTT message.

An example of the MQTT message is as follows:
topic: $oc/devices/{device_id}/sys/links/response;
payload: {"services_num": 2, "list": [{"client_id": "id1", port: 8902}, {"client_id": "id2", port: 8903}]}
client_id is an instance identifier of the second service instance, and port is a private port number corresponding to the second service instance.

Step 412: The edge gateway sends an MQTT CONNECT message to the LB. The edge gateway establishes a link with the second service instance based on the link establishment information obtained via the request, for example, establishes a link from the port 8902.

The MQTT CONNECT message carries the basic identity information of the edge gateway, the authentication information of the edge gateway, and an instance identifier and a port number (8902) that correspond to the second service instance.

Step 413: LB performs routing distribution. The LB routes the MQTT CONNECT message to the second service instance (for example, a service instance 2) according to a fixed distribution policy for the port 8902.

Step 414: The service instance 2 completes authentication and performs connection binding. Access authentication is completed based on specified client_id, establishment of a second communication link is completed, and the connection binding is performed. The service instance 2 is bound to the edge gateway as an available route.

In this case, the second communication link is successfully established between the edge gateway and the service instance 2. To be specific, currently, the first communication link is established between the edge gateway and the service instance 1, and the second communication link is successfully established between the edge gateway and the service instance 2.

Step 415: The edge gateway sends an MQTT CONNECT message to the LB. The edge gateway establishes a link with the second service instance based on the link establishment information obtained via the request, for example, establishes a link from the port 8903.

Step 416: LB performs routing distribution. The LB routes the MQTT CONNECT message to the second service instance (for example, a service instance 3) according to a fixed distribution policy for the port 8903.

Step 417: The service instance 3 performs authentication and connection binding. Access authentication is completed based on specified client_id, establishment of the second communication link is completed, and the connection binding is performed. The service instance 3 is bound to the edge gateway as an available route.

In this case, the second communication link is successfully established between the edge gateway and the service instance 3. To be specific, currently, the first communication link is established between the edge gateway and the service instance 1, the second communication link is successfully established between the edge gateway and the service instance 2, and the second communication link is successfully established between the edge gateway and the service instance 3. In this way, the edge gateway may perform data transmission with the internet of things platform over three communication links, and data on each communication link is processed by different service instances, so that congestion on the communication link between the edge gateway and the internet of things platform can be avoided.

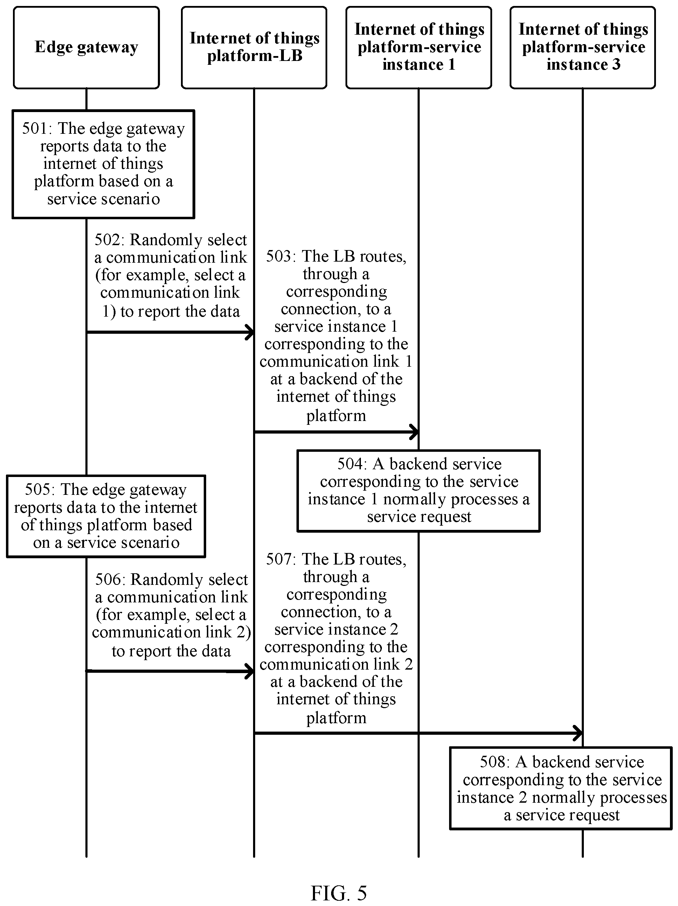

FIG. 5 is a flowchart of a method for reporting data by an edge gateway to an internet of things platform according to this application. Based on multi-link uplink communication, the edge gateway actively sends a message (for example, reports collected data sent by an internet of things device) to the internet of things platform. Refer to FIG. 5, the method includes the following steps.

Step 501: The edge gateway reports data to the internet of things platform based on a service scenario.

Step 502: The edge gateway randomly selects a communication link (for example, selects a communication link 1) to report the data.

Step 503: LB routes, through a corresponding connection, to a service instance 1 that corresponds to the communication link 1 and that is at a backend of the internet of things platform.

Step 504: A backend service corresponding to the service instance 1 normally processes a service request.

Step 505: The edge gateway reports data to the internet of things platform based on a service scenario.

Step 506: The edge gateway randomly selects a communication link (for example, selects a communication link 2) to report the data.

Step 507: The LB routes, through a corresponding connection, to a service instance 2 that corresponds to the communication link 2 and that is at a backend of the internet of things platform.

Step 508: A backend service corresponding to the service instance 2 normally processes a service request.

In the method for reporting data by the edge gateway to the internet of things platform provided in this embodiment of this application, the edge gateway may report data to different service instances over a plurality of communication links, so that congestion on the communication link between the edge gateway and the internet of things platform can be avoided.

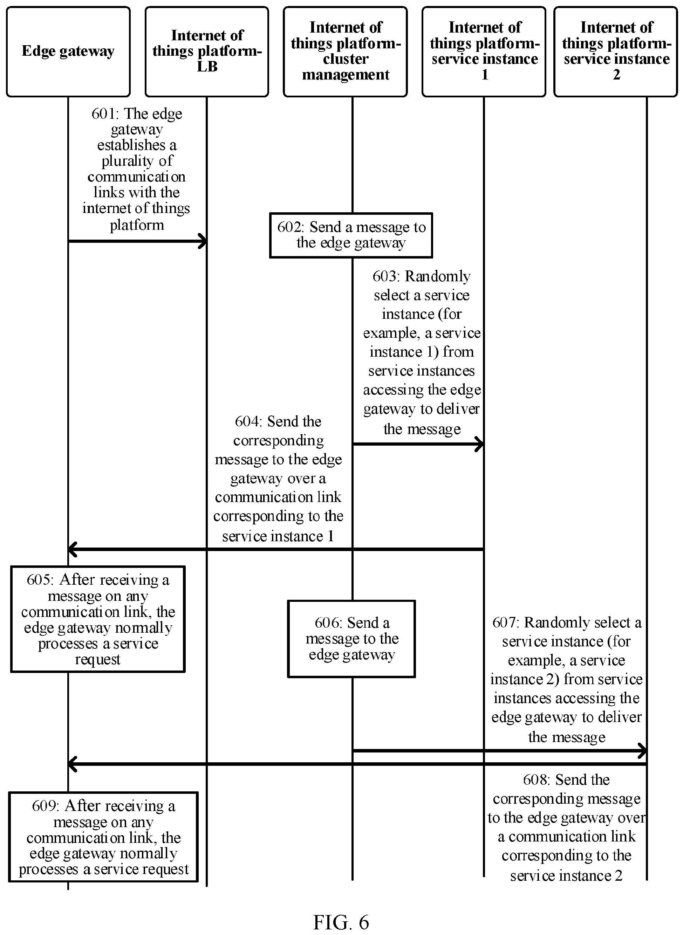

FIG. 6 is a flowchart of a method for sending a message by an internet of things platform to an edge gateway according to this application. Based on multi-link downlink communication, the internet of things platform actively sends a message (for example, delivers a control command) to the edge gateway. Refer to FIG. 6, the method includes the following steps.

Step 601: The edge gateway establishes a plurality of communication links with the internet of things platform.

Step 602: A cluster management service on the internet of things platform sends a message (for example, a control command) to the edge gateway.

The cluster management service may be a service instance on the internet of things platform other than an access service and a load balancing service. The cluster management service may record a correspondence between the edge gateway and each service instance accessing the edge gateway.

Step 603: The cluster management service randomly selects a service instance (for example, a service instance 1) from service instances accessing the edge gateway to deliver the message.

Step 604: LB sends the corresponding message to the edge gateway over a communication link corresponding to the service instance 1.

Step 605: After receiving a message on any communication link, the edge gateway normally processes a service request.

Step 606: The cluster management service on the internet of things platform sends a message (for example, a control command) to the edge gateway.

Step 607: The cluster management service randomly selects a service instance (for example, a service instance 2) from service instances accessing the edge gateway to deliver the message.

Step 608: The LB sends the corresponding message to the edge gateway over a communication link corresponding to the service instance 2.

Step 609: After receiving a message on any communication link, the edge gateway normally processes a service request.

In the method for sending a message by the internet of things platform to the edge gateway provided in this embodiment of this application, the internet of things platform may send a message to the edge gateway over a plurality of communication links, so that congestion on the communication link between the edge gateway and the internet of things platform can be avoided.

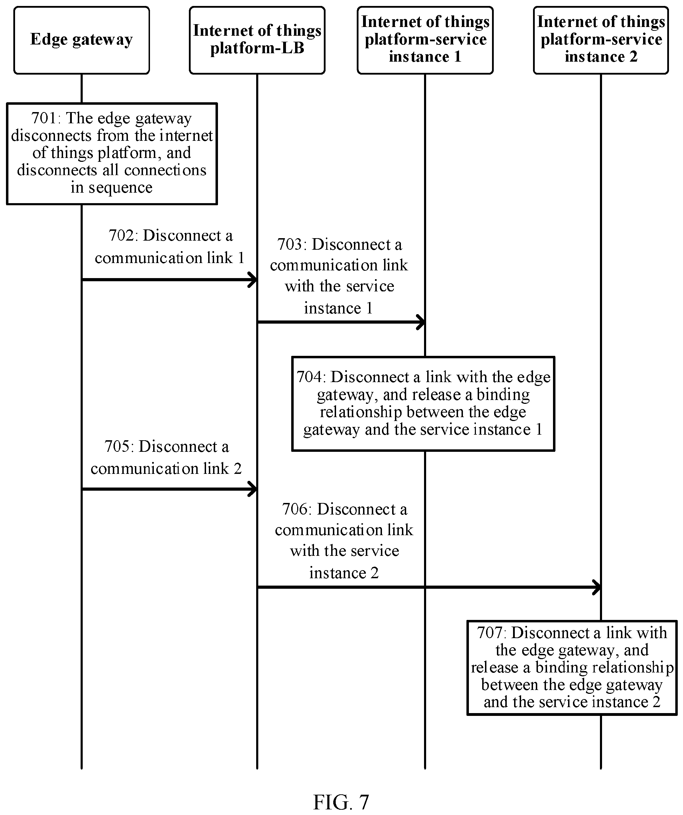

FIG. 7 is a flowchart of a method for disconnecting a connection to an edge gateway in a multi-link mode according to this application. Refer to FIG. 7, the method includes the following steps.

Step 701: The edge gateway disconnects communication links established with an internet of things platform in sequence.

Step 702: The edge gateway disconnects a communication link 1.

Step 703: LB disconnects a communication link with a service instance 1, and releases a binding relationship between the edge gateway corresponding to the communication link 1 and the service instance 1.

Step 704: The service instance 1 disconnects a link with the edge gateway, and releases the binding relationship between the edge gateway and the service instance 1.

Step 705: The edge gateway disconnects a communication link 2.

Step 706: The LB disconnects a communication link with a service instance 2, and releases a binding relationship between the edge gateway corresponding to the communication link 2 and the service instance 2.

Step 707: The service instance 2 disconnects a link with the edge gateway, and releases the binding relationship between the edge gateway and the service instance 2.

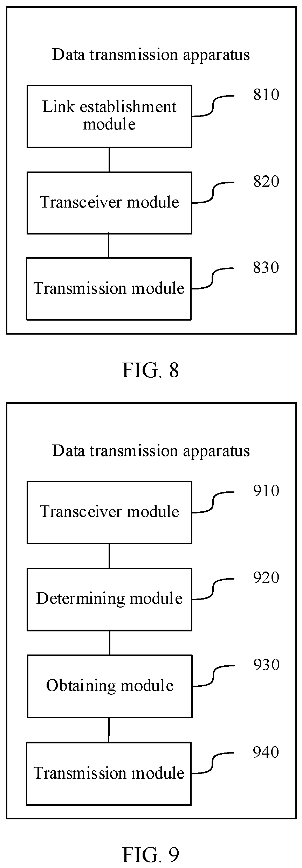

FIG. 8 is a diagram of a structure of a data transmission apparatus according to an embodiment of this application. The apparatus may be the edge gateway in the foregoing embodiment. As shown in FIG. 8, the apparatus includes:
a link establishment module 810, configured to establish a first communication link with an internet of things platform, where the link establishment module 810 may be specifically configured to implement link establishment functions corresponding to the foregoing step 201 and an implicit step of step 201;
a transceiver module 820, configured to: send a multi-link access request to the internet of things platform over the first communication link, where the multi-link access request carries a first quantity of internet of things devices accessing an edge gateway; and receive link establishment information that is sent by the internet of things platform and that corresponds to at least one second communication link, where the transceiver module 820 may be specifically configured to implement receiving and sending functions corresponding to the foregoing step 202 and step 203 and implicit steps of step 202 and step 203, where
the link establishment module 810 is configured to establish the at least one second communication link with the internet of things platform based on the link establishment information corresponding to the at least one second communication link, and the link establishment module 810 may be specifically configured to implement link establishment functions corresponding to the foregoing step 204 and an implicit step of step 204; and
a transmission module 830, configured to perform data transmission with the internet of things platform over the first communication link and the second communication link, where the transmission module 830 may be specifically configured to implement a transmission function corresponding to the foregoing step 205 and an implicit step of step 205.

Optionally, the link establishment module 810 is configured to send, to the internet of things platform based on the link establishment information corresponding to the at least one second communication link, a link establishment request respectively corresponding to the at least one second communication link, where the link establishment request carries a gateway identifier of the edge gateway, the gateway identifier is different from a gateway identifier used by the edge gateway to establish the first communication link, and when there are a plurality of link establishment requests, each link establishment request carries a different gateway identifier.

Optionally, the link establishment information includes a private port number of a service instance corresponding to the second communication link. The link establishment module 810 is configured to send, to the internet of things platform, the link establishment request respectively corresponding to the at least one second communication link, where the link establishment request carries the private port number corresponding to the second communication link.

Optionally, the transmission module 830 is configured to: select a target communication link from the first communication link and the second communication link according to a specified communication link selection policy each time data needs to be sent to the internet of things platform; and send the data over the target communication link.

Optionally, the communication link selection policy includes random selection or sequential selection.

Optionally, the multi-link access request further carries a communication frequency of the internet of things device.

An embodiment of this application further provides an edge gateway. The edge gateway includes a processor and a memory. The memory stores at least one instruction. The at least one instruction is loaded and executed by the processor to implement the data transmission method provided in the foregoing embodiments. It should be noted that the link establishment module 810, the transceiver module 820, and the transmission module 830 may be implemented by the processor, or may be implemented by the processor in cooperation with components such as the memory.

FIG. 9 is a diagram of a structure of a data transmission apparatus according to an embodiment of this application. The apparatus may be the internet of things platform in the foregoing embodiment. As shown in FIG. 9, the apparatus includes:
a transceiver module 910, configured to receive a multi-link access request sent by an edge gateway over a first communication link, where the multi-link access request carries a first quantity of internet of things devices accessing the edge gateway, and the transceiver module 910 may be specifically configured to implement receiving and sending functions corresponding to the foregoing step 301 and an implicit step of step 301;
a determining module 920, configured to determine, based on the first quantity, a second quantity of second communication links to be established with the edge gateway, where the determining module 920 may be specifically configured to implement a determining function corresponding to the foregoing step 302 and an implicit step of step 302;
an obtaining module 930, configured to obtain link establishment information corresponding to the second quantity of second communication links, where the obtaining module 930 may be specifically configured to implement an obtaining function corresponding to the foregoing step 303 and an implicit step of the step 303, where
the transceiver module 910 is configured to send, to the edge gateway, the link establishment information corresponding to the second quantity of second communication links, and the link establishment information indicates the edge gateway to establish the second quantity of second communication links with the internet of things platform, and the transceiver module 910 may be specifically configured to implement receiving and sending functions corresponding to the foregoing step 304 and an implicit step of step 304; and
a transmission module 940, configured to perform data transmission with the edge gateway over the first communication link and the second communication link, where the transmission module 940 may be specifically configured to implement a transmission function corresponding to the foregoing step 305 and an implicit step of step 305.

Optionally, the determining module 920 is configured to determine, based on a first correspondence, the second quantity that corresponds to the first quantity and that is of the second communication links to be established with the edge gateway.

Optionally, the multi-link access request further carries a communication frequency of the internet of things device accessing the edge gateway. The determining module 920 is configured to determine, based on the first quantity and the communication frequency, the second quantity of second communication links to be established with the edge gateway.

Optionally, the determining module 920 is configured to: determine a product of the first quantity and the communication frequency; and determine, based on a second correspondence, the second quantity that corresponds to the product and that is of the second communication link to be established with the edge gateway.

Optionally, the obtaining module 930 is configured to: determine, from service instances other than a service instance corresponding to the first communication link, service instances of the second quantity with least corresponding load; and obtain link establishment information respectively corresponding to the second quantity of service instances.

Optionally, the link establishment information includes a private port number corresponding to a service instance. The transceiver module 910 is further configured to: receive a link establishment request that is sent by the edge gateway and that carries the private port number; and establish a second communication link between the edge gateway and a service instance corresponding to the private port number.

Optionally, the transmission module 940 is configured to: select a target communication link from the first communication link and the second communication link according to a specified communication link selection policy each time data needs to be sent to the edge gateway; and send the data over the target communication link.

Optionally, the communication link selection policy includes random selection or sequential selection.

The transceiver module 910, the determining module 920, the obtaining module 930, and the transmission module 940 may all be implemented by using software, or may be implemented by using hardware. For example, the following uses the transceiver module 910 as an example to describe an implementation of the transceiver module 910. Similarly, for implementations of the determining module 920, the obtaining module 930, and the transmission module 940, refer to the implementation of the transceiver module 910.

The module is used as an example of a software functional unit, and the transceiver module 910 may include code run on a computing instance. The computing instance may include at least one of a physical host (a computing device), a virtual machine, and a container. Further, there may be one or more computing instances. For example, the transceiver module 910 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is provided in one region. A communication gateway needs to be configured in each VPC for communication between two VPCs in the same region or between VPCs in different regions. Interconnection between VPCs is implemented through the communication gateway.

The module is used as an example of a hardware function unit, and the transceiver module 910 may include at least one computing device, for example, a server. Alternatively, the transceiver module 910 may be a device implemented by using an application-specific integrated circuit (application-specific integrated circuit, ASIC) or a programmable logic device (programmable logic device, PLD), or the like. The PLD may be implemented by a complex programmable logical device (complex programmable logical device, CPLD), a field-programmable gate array (field programmable gate array, FPGA), generic array logic (generic array logic, GAL), or any combination thereof.

A plurality of computing devices included in the transceiver module 910 may be distributed in the same region, or may be distributed in different regions. The plurality of computing devices included in the transceiver module 910 may be distributed in the same AZ, or may be distributed in different AZs. Similarly, the plurality of computing devices included in the transceiver module 910 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the transceiver module 910 may be configured to perform any step in the data transmission method, the determining module 920 may be configured to perform any step in the data transmission method, and a obtaining module 930 may be configured to perform any step in the data transmission method. Steps implemented by the transceiver module 910, the determining module 920, the obtaining module 930, and the transmission module 940 may be specified as required. The transceiver module 910, the determining module 920, the obtaining module 930, and the transmission module 940 respectively implement different steps in the data transmission method, to implement all functions of the data transmission apparatus.

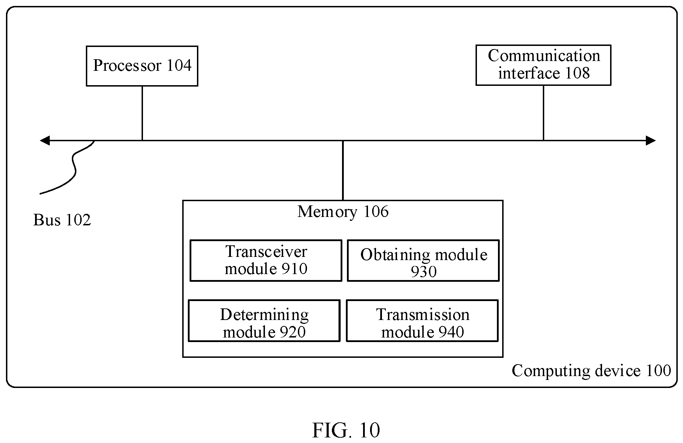

This application further provides a computing device 100. The computing device 100 may be a server on the foregoing internet of things platform. As shown in FIG. 10, the computing device 100 includes a bus 102, a processor 104, a memory 106, and a communication interface 108. The processor 104, the memory 106, and the communication interface 108 communicate with each other via the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is for representing the bus in FIG. 10, but this does not mean that there is only one bus or only one type of bus. The bus 102 may include a channel for transferring information between various components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement functions of the transceiver module 910, the determining module 920, the obtaining module 930, and the transmission module 940, to implement the data transmission method. In other words, the memory 106 stores instructions used for performing the data transmission method.

The communication interface 108 implements communication between the computing device 100 and another device or a communication network by using a transceiver module, for example, but not limited to a network interface card or a transceiver.

An embodiment of this application further provides a computing device cluster. The computing device cluster may be a server cluster on the foregoing internet of things platform, and the computing device cluster includes at least one computing device. The computing device may be a server, for example, a central server, an edge server, or a local server in a local data center. In some embodiments, the computing device may alternatively be a terminal device, such as a desktop computer, a notebook computer, or a smartphone.

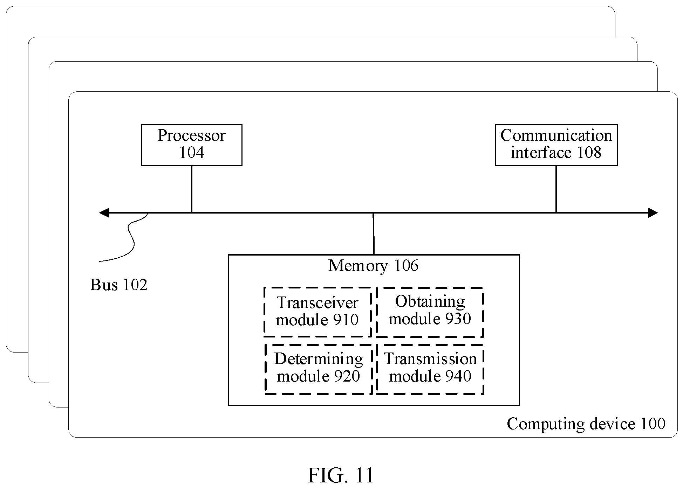

As shown in FIG. 11, the computing device cluster includes at least one computing device 100. A memory 106 in the one or more computing devices 100 in the computing device cluster may store same instructions used for performing the foregoing data transmission method.

In some possible implementations, the memory 106 in the one or more computing devices 100 in the computing device cluster may alternatively store some instructions used for performing the foregoing data transmission method. In other words, a combination of the one or more computing devices 100 may jointly execute instructions used for performing the foregoing data transmission method.

It should be noted that memories 106 in different computing devices 100 in the computing device cluster may store different instructions respectively used for performing some functions of the data transmission apparatus. In other words, instructions stored in the memories 106 in different computing devices 100 may implement functions of one or more of the transceiver module 910, the determining module 920, the obtaining module 930, and the transmission module 940.

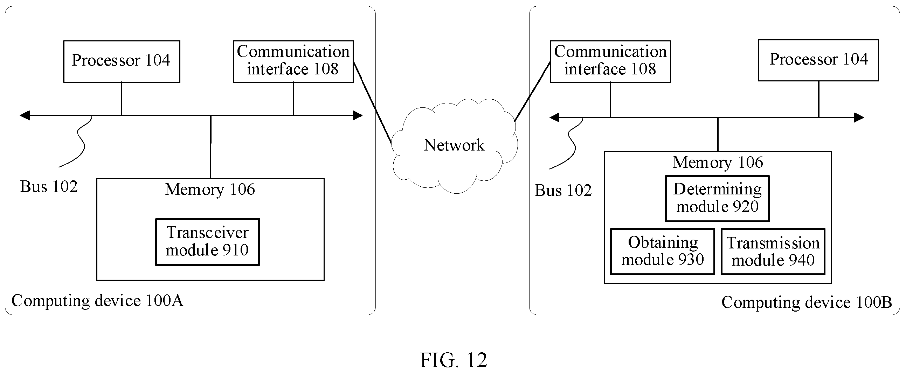

In some possible implementations, the one or more computing devices in the computing device cluster may be connected through a network. The network may be a wide area network, a local area network, or the like. FIG. 12 shows a possible implementation. As shown in FIG. 12, two computing devices 100A and 100B are connected through a network. Specifically, communication interfaces in the computing devices are connected to the network. In this type of possible implementation, a memory 106 in the computing device 100A stores instructions used for performing a function of the transceiver module 910. In addition, a memory 106 in the computing device 100B stores instructions used for performing functions of the determining module 920, the obtaining module 930, and the transmission module 940.

The connection manner between the computing device clusters shown in FIG. 12 may be that, considering that the data transmission method provided in this application requires a large computing amount, it is considered that the functions implemented by the determining module 920, the obtaining module 930, and the transmission module 940 are performed by the computing device 100B.

It should be understood that functions of the computing device 100A shown in FIG. 12 may alternatively be completed by the plurality of computing devices 100. Similarly, functions of the computing device 100B may alternatively be completed by the plurality of computing devices 100.

An embodiment of this application further provides another computing device cluster. For a connection relationship between computing devices in the computing device cluster, refer to the connection manners of the computing device cluster in FIG. 11 and FIG. 12 similarly. A difference lies in that the memory 106 in the one or more computing devices 100 in the computing device cluster may store same instructions used for performing the foregoing data transmission method.

In some possible implementations, the memory 106 in the one or more computing devices 100 in the computing device cluster may alternatively store some instructions used for performing the foregoing data transmission method. In other words, a combination of the one or more computing devices 100 may jointly execute instructions used for performing the foregoing data transmission method.

An embodiment of this application further provides a data transmission system. The system includes an edge gateway and an internet of things platform. The edge gateway may implement the data transmission method implemented by the edge gateway in the foregoing embodiment. The internet of things platform may implement the data transmission method implemented by the internet of things platform in the foregoing embodiment.

An embodiment of this application further provides a computer program product including instructions. The computer program product may be software or a program product that includes the instructions and that can run on an edge gateway or that is stored in any usable medium. When the computer program product runs on the edge gateway, the edge gateway is enabled to perform the data transmission method.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the foregoing data transmission method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct an edge gateway to perform a data transmission method, or instruct a computing device to perform a data transmission method.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions in embodiments of this application as defined in the appended claims.

## Claims

1. A data transmission method, wherein the method is applied to an edge gateway, and the method comprises:
establishing (201) a first communication link with an internet of things platform;
sending (202) a multi-link access request to the internet of things platform over the first communication link, wherein the multi-link access request carries a first quantity of internet of things devices accessing the edge gateway;
receiving (203) link establishment information that is sent by the internet of things platform and that corresponds to at least one second communication link;
establishing (204) the at least one second communication link with the internet of things platform based on the link establishment information corresponding to the at least one second communication link; and
performing (205) data transmission with the internet of things platform over the first communication link and the second communication link.

2. The method according to claim 1, wherein the establishing the at least one second communication link with the internet of things platform based on the link establishment information corresponding to the at least one second communication link comprises:
sending, to the internet of things platform based on the link establishment information corresponding to the at least one second communication link, a link establishment request respectively corresponding to the at least one second communication link, wherein the link establishment request carries a gateway identifier of the edge gateway, the gateway identifier is different from a gateway identifier used by the edge gateway to establish the first communication link, and when there are a plurality of link establishment requests, each link establishment request carries a different gateway identifier.

3. The method according to claim 1 or 2, wherein the link establishment information comprises a private port number of a service instance corresponding to the second communication link; and
the establishing the at least one second communication link with the internet of things platform based on the link establishment information corresponding to the at least one second communication link comprises:
sending, to the internet of things platform, the link establishment request respectively corresponding to the at least one second communication link, wherein the link establishment request carries the private port number corresponding to the second communication link.

4. The method according to any one of claims 1 to 3, wherein the performing data transmission with the internet of things platform over the first communication link and the second communication link comprises:
selecting a target communication link from the first communication link and the second communication link according to a specified communication link selection policy each time data needs to be sent to the internet of things platform; and
sending the data over the target communication link.

5. A data transmission method, wherein the method is applied to an internet of things platform, and the method comprises:
receiving (301) a multi-link access request sent by an edge gateway over a first communication link, wherein the multi-link access request carries a first quantity of internet of things devices accessing the edge gateway;
determining (302), based on the first quantity, a second quantity of second communication links to be established with the edge gateway;
obtaining (303) link establishment information corresponding to the second quantity of second communication links;
sending (304), to the edge gateway, the link establishment information corresponding to the second quantity of second communication links, wherein the link establishment information indicates the edge gateway to establish the second quantity of second communication links with the internet of things platform; and
performing (305) data transmission with the edge gateway over the first communication link and the second communication link.

6. The method according to claim 5, wherein the determining, based on the first quantity, a second quantity of second communication links to be established with the edge gateway comprises:
determining, based on a first correspondence, the second quantity that corresponds to the first quantity and that is of the second communication links to be established with the edge gateway.

7. The method according to claim 5 or 6, wherein the multi-link access request further carries a communication frequency of the internet of things device accessing the edge gateway; and
the determining, based on the first quantity, a second quantity of second communication links to be established with the edge gateway comprises:
determining, based on the first quantity and the communication frequency, the second quantity of second communication links to be established with the edge gateway.

8. The method according to claim 7, wherein the determining, based on the first quantity and the communication frequency, the second quantity of second communication links to be established with the edge gateway comprises:
determining a product of the first quantity and the communication frequency; and
determining, based on a second correspondence, the second quantity that corresponds to the product and that is of the second communication links to be established with the edge gateway.

9. The method according to any one of claims 5 to 8, wherein the obtaining link establishment information corresponding to the second quantity of second communication links comprises:
determining, from service instances other than a service instance corresponding to the first communication link, service instances of the second quantity with least corresponding load; and
obtaining link establishment information respectively corresponding to the second quantity of service instances.

10. The method according to any one of claims 5 to 9, wherein the link establishment information comprises a private port number corresponding to a service instance; and
before the performing data transmission with the edge gateway over the first communication link and the second communication link, the method further comprises:
receiving a link establishment request that is sent by the edge gateway and that carries the private port number; and
establishing a second communication link between the edge gateway and the service instance corresponding to the private port number.

11. The method according to any one of claims 5 to 10, wherein the performing data transmission with the edge gateway over the first communication link and the second communication link comprises:
selecting a target communication link from the first communication link and the second communication link according to a specified communication link selection policy each time data needs to be sent to the edge gateway; and
sending the data over the target communication link.

12. A data transmission apparatus, wherein the apparatus comprises:
a link establishment module, configured to establish a first communication link with an internet of things platform;
a transceiver module, configured to: send a multi-link access request to the internet of things platform over the first communication link, wherein the multi-link access request carries a first quantity of internet of things devices accessing an edge gateway; and receive link establishment information that is sent by the internet of things platform and that corresponds to at least one second communication link, wherein
the link establishment module is configured to establish the at least one second communication link with the internet of things platform based on the link establishment information corresponding to the at least one second communication link; and
a transmission module, configured to perform data transmission with the internet of things platform over the first communication link and the second communication link.

13. A data transmission apparatus, wherein the apparatus comprises:
a transceiver module, configured to receive a multi-link access request sent by an edge gateway over a first communication link, wherein the multi-link access request carries a first quantity of internet of things devices accessing the edge gateway;
a determining module, configured to determine, based on the first quantity, a second quantity of second communication links to be established with the edge gateway;
an obtaining module, configured to obtain link establishment information corresponding to the second quantity of second communication links, wherein
the transceiver module is configured to send, to the edge gateway, the link establishment information corresponding to the second quantity of second communication links, wherein the link establishment information indicates the edge gateway to establish the second quantity of second communication links with the data transmission apparatus; and
a transmission module, configured to perform data transmission with the edge gateway over the first communication link and the second communication link.

14. A data transmission system, comprising an edge gateway and an internet of things platform, wherein
the edge gateway is configured to: establish a first communication link with the internet of things platform, and send a multi-link access request to the internet of things platform over the first communication link, wherein the multi-link access request carries a first quantity of internet of things devices accessing the edge gateway;
the internet of things platform is configured to: determine, based on the first quantity, a second quantity of second communication links to be established with the edge gateway, obtain link establishment information corresponding to the second quantity of second communication links, and send, to the edge gateway, the link establishment information corresponding to the second quantity of second communication links;
the edge gateway is configured to establish the at least one second communication link with the internet of things platform based on link establishment information corresponding to the at least one second communication link; and
the edge gateway is configured to perform data transmission with the internet of things platform over the first communication link and the second communication link.

15. A computer-readable storage medium, comprising computer program instructions, wherein when the computer program instructions are executed by a computing device cluster, the computing device cluster performs the data transmission method according to any one of claims 1 to 4 and/or the data transmission method according to any one of claims 5 to 11.

## Patentansprüche

1. Datenübertragungsverfahren, wobei das Verfahren auf ein Edge-Gateway angewandt wird und wobei das Verfahren Folgendes umfasst:
Aufbauen (201) einer ersten Kommunikationsverbindung mit einer Internet-of-Things-Plattform;
Senden (202) einer Mehrverbindungszugriffsanforderung über die erste Kommunikationsverbindung an die Internet-of-Things-Plattform, wobei die Mehrverbindungszugriffsanforderung eine erste Anzahl von Internet-of-Things-Vorrichtungen enthält, die auf das Edge-Gateway zugreifen;
Empfangen (203) von Verbindungsaufbauinformationen, die von der Internet-of-Things-Plattform gesendet werden und mindestens einer zweiten Kommunikationsverbindung entsprechen;
Aufbauen (204) der mindestens einen zweiten Kommunikationsverbindung mit der Internet-of-Things-Plattform basierend auf den der mindestens einen zweiten Kommunikationsverbindung entsprechenden Verbindungsaufbauinformationen; und
Durchführen (205) einer Datenübertragung mit der Internet-of-Things-Plattform über die erste Kommunikationsverbindung und die zweite Kommunikationsverbindung.

2. Verfahren nach Anspruch 1, wobei das Aufbauen der mindestens einen zweiten Kommunikationsverbindung mit der Internet-of-Things-Plattform basierend auf den der mindestens einen zweiten Kommunikationsverbindung entsprechenden Verbindungsaufbauinformationen Folgendes umfasst:
Senden einer der mindestens einen zweiten Kommunikationsverbindung jeweils entsprechenden Verbindungsaufbauanforderung an die Internet-of-Things-Plattform basierend auf den der mindestens einen zweiten Kommunikationsverbindung entsprechenden Verbindungsaufbauinformationen, wobei die Verbindungsaufbauanforderung eine Gateway-Kennung des Edge-Gateways enthält, die Gateway-Kennung von einer Gateway-Kennung verschieden ist, die das Edge-Gateway zum Aufbauen der ersten Kommunikationsverbindung verwendet, und, wenn eine Mehrzahl von Verbindungsaufbauanforderungen vorliegt, jede Verbindungsaufbauanforderung eine andere Gateway-Kennung enthält.

3. Verfahren nach Anspruch 1 oder 2, wobei die Verbindungsaufbauinformationen eine interne Portnummer einer der zweiten Kommunikationsverbindung entsprechenden Dienstinstanz umfassen; und
das Aufbauen der mindestens einen zweiten Kommunikationsverbindung mit der Internet-of-Things-Plattform basierend auf den der mindestens einen zweiten Kommunikationsverbindung entsprechenden Verbindungsaufbauinformationen Folgendes umfasst:
Senden der der mindestens einen zweiten Kommunikationsverbindung jeweils entsprechenden Verbindungsaufbauanforderung an die Internet-of-Things-Plattform, wobei die Verbindungsaufbauanforderung die der zweiten Kommunikationsverbindung entsprechende interne Portnummer enthält.

4. Verfahren nach einem der Ansprüche 1 bis 3, wobei das Durchführen einer Datenübertragung mit der Internet-of-Things-Plattform über die erste Kommunikationsverbindung und die zweite Kommunikationsverbindung Folgendes umfasst:
Auswählen einer Zielkommunikationsverbindung aus der ersten Kommunikationsverbindung und der zweiten Kommunikationsverbindung gemäß einer vorgegebenen Kommunikationsverbindungsauswahlrichtlinie jedes Mal, wenn Daten an die Internet-of-Things-Plattform gesendet werden müssen; und
Senden der Daten über die Zielkommunikationsverbindung.

5. Datenübertragungsverfahren, wobei das Verfahren auf eine Internet-of-Things-Plattform angewandt wird und wobei das Verfahren Folgendes umfasst:
Empfangen (301) einer von einem Edge-Gateway über eine erste Kommunikationsverbindung gesendeten Mehrverbindungszugriffsanforderung, wobei die Mehrverbindungszugriffsanforderung eine erste Anzahl von Internet-of-Things-Vorrichtungen enthält, die auf das Edge-Gateway zugreifen;
Bestimmen (302), basierend auf der ersten Anzahl, einer zweiten Anzahl von zweiten Kommunikationsverbindungen, die mit dem Edge-Gateway aufzubauen sind;
Beschaffen (303) von Verbindungsaufbauinformationen, die der zweiten Anzahl von zweiten Kommunikationsverbindungen entsprechen;
Senden (304) der der zweiten Anzahl von zweiten Kommunikationsverbindungen entsprechenden Verbindungsaufbauinformationen an das Edge-Gateway, wobei die Verbindungsaufbauinformationen das Edge-Gateway anweisen, die zweite Anzahl von zweiten Kommunikationsverbindungen mit der Internet-of-Things-Plattform aufzubauen; und
Durchführen (305) einer Datenübertragung mit dem Edge-Gateway über die erste Kommunikationsverbindung und die zweite Kommunikationsverbindung.

6. Verfahren nach Anspruch 5, wobei das Bestimmen, basierend auf der ersten Anzahl, einer zweiten Anzahl von zweiten Kommunikationsverbindungen, die mit dem Edge-Gateway aufzubauen sind, Folgendes umfasst:
Bestimmen, basierend auf einer ersten Zuordnungsbeziehung, der der ersten Anzahl entsprechenden zweiten Anzahl der mit dem Edge-Gateway aufzubauenden zweiten Kommunikationsverbindungen.

7. Verfahren nach Anspruch 5 oder 6, wobei die Mehrverbindungszugriffsanforderung ferner eine Kommunikationsfrequenz der auf das Edge-Gateway zugreifenden Internet-of-Things-Vorrichtung enthält; und
das Bestimmen, basierend auf der ersten Anzahl, einer zweiten Anzahl von zweiten Kommunikationsverbindungen, die mit dem Edge-Gateway aufzubauen sind, Folgendes umfasst:
Bestimmen, basierend auf der ersten Anzahl und der Kommunikationsfrequenz, der zweiten Anzahl von zweiten Kommunikationsverbindungen, die mit dem Edge-Gateway aufzubauen sind.

8. Verfahren nach Anspruch 7, wobei das Bestimmen, basierend auf der ersten Anzahl und der Kommunikationsfrequenz, der zweiten Anzahl von zweiten Kommunikationsverbindungen, die mit dem Edge-Gateway aufzubauen sind, Folgendes umfasst:
Bestimmen eines Produkts der ersten Anzahl und der Kommunikationsfrequenz; und
Bestimmen, basierend auf einer zweiten Zuordnungsbeziehung, der dem Produkt entsprechenden zweiten Anzahl der mit dem Edge-Gateway aufzubauenden zweiten Kommunikationsverbindungen.

9. Verfahren nach einem der Ansprüche 5 bis 8, wobei das Beschaffen von Verbindungsaufbauinformationen, die der zweiten Anzahl von zweiten Kommunikationsverbindungen entsprechen, Folgendes umfasst:
Bestimmen der zweiten Anzahl von Dienstinstanzen mit der jeweils geringsten Last aus anderen Dienstinstanzen als einer der ersten Kommunikationsverbindung entsprechenden Dienstinstanz; und
Beschaffen von Verbindungsaufbauinformationen, die der zweiten Anzahl von Dienstinstanzen jeweils entsprechen.

10. Verfahren nach einem der Ansprüche 5 bis 9, wobei die Verbindungsaufbauinformationen eine einer Dienstinstanz entsprechende interne Portnummer umfassen; und
vor dem Durchführen einer Datenübertragung mit dem Edge-Gateway über die erste Kommunikationsverbindung und die zweite Kommunikationsverbindung das Verfahren ferner Folgendes umfasst:
Empfangen einer von dem Edge-Gateway gesendeten Verbindungsaufbauanforderung, die die interne Portnummer enthält; und
Aufbauen einer zweiten Kommunikationsverbindung zwischen dem Edge-Gateway und der der internen Portnummer entsprechenden Dienstinstanz.

11. Verfahren nach einem der Ansprüche 5 bis 10, wobei das Durchführen einer Datenübertragung mit dem Edge-Gateway über die erste Kommunikationsverbindung und die zweite Kommunikationsverbindung Folgendes umfasst:
Auswählen einer Zielkommunikationsverbindung aus der ersten Kommunikationsverbindung und der zweiten Kommunikationsverbindung gemäß einer vorgegebenen Kommunikationsverbindungsauswahlrichtlinie jedes Mal, wenn Daten an das Edge-Gateway gesendet werden müssen; und
Senden der Daten über die Zielkommunikationsverbindung.

12. Datenübertragungsvorrichtung, wobei die Vorrichtung Folgendes umfasst:
ein Verbindungsaufbaumodul, das dazu ausgelegt ist, eine erste Kommunikationsverbindung mit einer Internet-of-Things-Plattform aufzubauen;
ein Sendeempfangsmodul, das dazu ausgelegt ist, eine Mehrverbindungszugriffsanforderung über die erste Kommunikationsverbindung an die Internet-of-Things-Plattform zu senden, wobei die Mehrverbindungszugriffsanforderung eine erste Anzahl von Internet-of-Things-Vorrichtungen enthält, die auf ein Edge-Gateway zugreifen, und Verbindungsaufbauinformationen zu empfangen, die von der Internet-of-Things-Plattform gesendet werden und mindestens einer zweiten Kommunikationsverbindung entsprechen, wobei
das Verbindungsaufbaumodul dazu ausgelegt ist, die mindestens eine zweite Kommunikationsverbindung mit der Internet-of-Things-Plattform basierend auf den der mindestens einen zweiten Kommunikationsverbindung entsprechenden Verbindungsaufbauinformationen aufzubauen; und
ein Übertragungsmodul, das dazu ausgelegt ist, eine Datenübertragung mit der Internet-of-Things-Plattform über die erste Kommunikationsverbindung und die zweite Kommunikationsverbindung durchzuführen.

13. Datenübertragungsvorrichtung, wobei die Vorrichtung Folgendes umfasst:
ein Sendeempfangsmodul, das dazu ausgelegt ist, eine von einem Edge-Gateway über eine erste Kommunikationsverbindung gesendete Mehrverbindungszugriffsanforderung zu empfangen, wobei die Mehrverbindungszugriffsanforderung eine erste Anzahl von Internet-of-Things-Vorrichtungen enthält, die auf das Edge-Gateway zugreifen;
ein Bestimmungsmodul, das dazu ausgelegt ist, basierend auf der ersten Anzahl eine zweite Anzahl von zweiten Kommunikationsverbindungen zu bestimmen, die mit dem Edge-Gateway aufzubauen sind;
ein Beschaffungsmodul, das dazu ausgelegt ist, Verbindungsaufbauinformationen zu beschaffen, die der zweiten Anzahl von zweiten Kommunikationsverbindungen entsprechen, wobei
das Sendeempfangsmodul dazu ausgelegt ist, die der zweiten Anzahl von zweiten Kommunikationsverbindungen entsprechenden Verbindungsaufbauinformationen an das Edge-Gateway zu senden, wobei die Verbindungsaufbauinformationen das Edge-Gateway anweisen, die zweite Anzahl von zweiten Kommunikationsverbindungen mit der Datenübertragungsvorrichtung aufzubauen; und
ein Übertragungsmodul, das dazu ausgelegt ist, eine Datenübertragung mit dem Edge-Gateway über die erste Kommunikationsverbindung und die zweite Kommunikationsverbindung durchzuführen.

14. Datenübertragungssystem, umfassend ein Edge-Gateway und eine Internet-of-Things-Plattform, wobei
das Edge-Gateway dazu ausgelegt ist, eine erste Kommunikationsverbindung mit der Internet-of-Things-Plattform aufzubauen und eine Mehrverbindungszugriffsanforderung über die erste Kommunikationsverbindung an die Internet-of-Things-Plattform zu senden, wobei die Mehrverbindungszugriffsanforderung eine erste Anzahl von Internet-of-Things-Vorrichtungen enthält, die auf das Edge-Gateway zugreifen;
die Internet-of-Things-Plattform dazu ausgelegt ist, basierend auf der ersten Anzahl eine zweite Anzahl von zweiten Kommunikationsverbindungen zu bestimmen, die mit dem Edge-Gateway aufzubauen sind, Verbindungsaufbauinformationen zu beschaffen, die der zweiten Anzahl von zweiten Kommunikationsverbindungen entsprechen, und die der zweiten Anzahl von zweiten Kommunikationsverbindungen entsprechenden Verbindungsaufbauinformationen an das Edge-Gateway zu senden;
das Edge-Gateway dazu ausgelegt ist, die mindestens eine zweite Kommunikationsverbindung mit der Internet-of-Things-Plattform basierend auf den der mindestens einen zweiten Kommunikationsverbindung entsprechenden Verbindungsaufbauinformationen aufzubauen; und
das Edge-Gateway dazu ausgelegt ist, eine Datenübertragung mit der Internet-of-Things-Plattform über die erste Kommunikationsverbindung und die zweite Kommunikationsverbindung durchzuführen.

15. Computerlesbares Speichermedium, umfassend Computerprogrammanweisungen, wobei, wenn die Computerprogrammanweisungen von einem Rechenvorrichtungscluster ausgeführt werden, der Rechenvorrichtungscluster das Datenübertragungsverfahren nach einem der Ansprüche 1 bis 4 und/oder das Datenübertragungsverfahren nach einem der Ansprüche 5 bis 11 durchführt.

## Revendications

1. Procédé de transmission de données, le procédé étant mis en œuvre par une passerelle de périphérie, et le procédé comprenant les étapes suivantes :
établir (201) une première liaison de communication avec une plateforme de l'Internet des objets ;
envoyer (202) une demande d'accès à liaisons multiples à la plate-forme de l'Internet des objets sur la première liaison de communication, la demande d'accès à liaisons multiples transportant une première quantité de dispositifs de l'Internet des objets accédant à la passerelle de périphérie ;
recevoir (203) des informations d'établissement de liaison qui sont émises par la plateforme de l'Internet des objets et qui correspondent à au moins une deuxième liaison de communication ;
établir (204) l'au moins une deuxième liaison de communication avec la plate-forme de l'Internet des objets sur la base des informations d'établissement de liaison correspondant à l'au moins une deuxième liaison de communication ; et
réaliser (205) une transmission de données avec la plate-forme de l'Internet des objets sur la première liaison de communication et la deuxième liaison de communication.

2. Procédé selon la revendication 1, dans lequel l'établissement de l'au moins une deuxième liaison de communication avec la plate-forme de l'Internet des objets sur la base des informations d'établissement de liaison correspondant à l'au moins une deuxième liaison de communication comprend l'étape suivante :
envoyer à destination de la plateforme de l'Internet des objets, sur la base des informations d'établissement de liaison correspondant à l'au moins une deuxième liaison de communication, une demande d'établissement de liaison correspondant respectivement à l'au moins une deuxième liaison de communication, où la demande d'établissement de liaison porte un identifiant de passerelle de la passerelle de périphérie, l'identifiant de passerelle est différent d'un identifiant de passerelle utilisé par la passerelle de périphérie pour établir la première liaison de communication et, lorsqu'il existe plusieurs demandes d'établissement de liaison, chaque demande d'établissement de liaison porte un identifiant de passerelle différent.

3. Procédé selon la revendication 1 ou la revendication 2, dans lequel les informations d'établissement de liaison comprennent un numéro de port privé d'une instance de service correspondant à la deuxième liaison de communication ; et
l'établissement de l'au moins une deuxième liaison de communication avec la plateforme de l'Internet des objets sur la base des informations d'établissement de liaison correspondant à l'au moins une deuxième liaison de communication comprend l'étape suivante :
envoyer, à la plate-forme de l'Internet des objets, la demande d'établissement de liaison correspondant respectivement à l'au moins une deuxième liaison de communication, la demande d'établissement de liaison portant le numéro de port privé correspondant à la deuxième liaison de communication.

4. Procédé selon l'une quelconque des revendications 1 à 3, dans lequel la réalisation d'une transmission de données avec la plate-forme de l'Internet des objets sur la première liaison de communication et la deuxième liaison de communication comprend les étapes suivantes :
sélectionner une liaison de communication cible parmi la première liaison de communication et la deuxième liaison de communication selon une politique de sélection de liaison de communication spécifiée chaque fois que des données doivent être envoyées à la plate-forme de l'Internet des objets ; et
envoyer les données sur la liaison de communication cible.

5. Procédé de transmission de données, le procédé étant mis en œuvre sur une plate-forme de l'Internet des objets, et le procédé comprenant les étapes suivantes :
recevoir (301) une demande d'accès à liaisons multiples envoyée par une passerelle de périphérie sur une première liaison de communication, où la demande d'accès à liaisons multiples porte une première quantité de dispositifs de l'Internet d'objets accédant à la passerelle de périphérie ;
déterminer (302), sur la base de la première quantité, une deuxième quantité de deuxièmes liaisons de communication à établir avec la passerelle de périphérie ;
obtenir (303) des informations d'établissement de liaison correspondant à la deuxième quantité de deuxièmes liaisons de communication ;
envoyer (304), à la passerelle de périphérie, les informations d'établissement de liaison correspondant à la deuxième quantité de deuxièmes liaisons de communication, les informations d'établissement de liaison indiquant à la passerelle de périphérie d'établir la deuxième quantité de deuxièmes liaisons de communication avec la plate-forme de l'Internet des objets ; et
réaliser (305) une transmission de données avec la passerelle de périphérie sur la première liaison de communication et la deuxième liaison de communication.

6. Procédé selon la revendication 5, dans lequel la détermination, sur la base de la première quantité, d'une deuxième quantité de deuxièmes liaisons de communication à établir avec la passerelle de périphérie comprend l'étape suivante :
déterminer, sur la base d'une première correspondance, la deuxième quantité qui correspond à la première quantité et qui concerne les deuxièmes liaisons de communication à établir avec la passerelle de périphérie.

7. Procédé selon la revendication 5 ou la revendication 6, dans lequel la demande d'accès à liaisons multiples transporte en outre une fréquence de communication du dispositif de l'Internet des objets accédant à la passerelle de périphérie ; et
la détermination, sur la base de la première quantité, d'une deuxième quantité de deuxièmes liaisons de communication à établir avec la passerelle de périphérie comprend l'étape suivante :
déterminer, sur la base de la première quantité et de la fréquence de communication, la deuxième quantité de deuxièmes liaisons de communication à établir avec la passerelle de périphérie.

8. Procédé selon la revendication 7, dans lequel la détermination, sur la base de la première quantité et de la fréquence de communication, de la deuxième quantité de deuxièmes liaisons de communication à établir avec la passerelle de périphérie comprend les étapes suivantes :
déterminer un produit de la première quantité par la fréquence de communication ; et
déterminer, sur la base d'une deuxième correspondance, la deuxième quantité qui correspond au produit et qui concerne les deuxièmes liaisons de communication à établir avec la passerelle de périphérie.

9. Procédé selon l'une quelconque des revendications 5 à 8, dans lequel l'obtention des informations d'établissement de liaison correspondant à la deuxième quantité de deuxièmes liaisons de communication comprend les étapes suivantes :
déterminer, parmi des instances de service autres que l'instance de service correspondant à la première liaison de communication, une deuxième quantité d'instances de service présentant la charge correspondante la plus faible ; et
obtenir des informations d'établissement de liaison correspondant respectivement à la deuxième quantité d'instances de service.

10. Procédé selon l'une quelconque des revendications 5 à 9, dans lequel les informations d'établissement de liaison comprennent un numéro de port privé correspondant à une instance de service ; et
avant d'effectuer une transmission de données avec la passerelle de périphérie sur la première liaison de communication et la deuxième liaison de communication, le procédé comprend en outre les étapes suivantes :
recevoir une demande d'établissement de liaison émise par la passerelle de périphérie et qui porte le numéro de port privé ; et
établir une deuxième liaison de communication entre la passerelle de périphérie et l'instance de service correspondant au numéro de port privé.

11. Procédé selon l'une quelconque des revendications 5 à 10, dans lequel la réalisation d'une transmission de données avec la passerelle de périphérie sur la première liaison de communication et la deuxième liaison de communication comprend les étapes suivantes :
sélectionner une liaison de communication cible parmi la première liaison de communication et la deuxième liaison de communication selon une politique de sélection de liaison de communication spécifiée chaque fois que des données doivent être envoyées à la passerelle de périphérie ; et
envoyer les données sur la liaison de communication cible.

12. Appareil de transmission de données, l'appareil comprenant :
un module d'établissement de liaison, configuré pour établir une première liaison de communication avec une plateforme de l'Internet des objets ;
un module émetteur/récepteur, configuré pour : envoyer une demande d'accès à liaisons multiples à la plate-forme de l'Internet des objets sur la première liaison de communication, la demande d'accès à liaisons multiples portant une première quantité de dispositifs de l'Internet des objets accédant à une passerelle de périphérie ; et recevoir des informations d'établissement de liaison qui sont envoyées par la plate-forme de l'Internet des objets et qui correspondent à au moins une deuxième liaison de communication, où
le module d'établissement de liaison est configuré pour établir l'au moins une deuxième liaison de communication avec la plate-forme de l'Internet des objets sur la base des informations d'établissement de liaison correspondant à l'au moins une deuxième liaison de communication ; et
un module de transmission, configuré pour effectuer une transmission de données avec la plate-forme de l'Internet des objets sur la première liaison de communication et la deuxième liaison de communication.

13. Appareil de transmission de données, l'appareil comprenant :
un module émetteur/récepteur, configuré pour recevoir une demande d'accès à liaisons multiples envoyée par une passerelle de périphérie sur une première liaison de communication, où la demande d'accès à liaisons multiples porte une première quantité de dispositifs de l'Internet d'objets accédant à la passerelle de périphérie
un module de détermination, configuré pour déterminer, sur la base de la première quantité, une deuxième quantité de deuxièmes liaisons de communication à établir avec la passerelle de périphérie ;
un module d'obtention, configuré pour obtenir des informations d'établissement de liaison correspondant à la deuxième quantité de deuxièmes liaisons de communication, où
le module émetteur/récepteur est configuré pour envoyer, à la passerelle de périphérie, les informations d'établissement de liaison correspondant à la deuxième quantité de deuxièmes liaisons de communication, les informations d'établissement de liaison indiquant à la passerelle de périphérie d'établir la deuxième quantité de deuxièmes liaisons de communication avec l'appareil de transmission de données ; et
un module de transmission, configuré pour effectuer une transmission de données avec la passerelle de périphérie sur la première liaison de communication et la deuxième liaison de communication.

14. Système de transmission de données, comprenant une passerelle de périphérie et une plate-forme de l'Internet des objets, dans lequel
la passerelle de périphérie est configurée pour : établir une première liaison de communication avec la plate-forme de l'Internet des objets, et envoyer une demande d'accès à liaisons multiples à la plate-forme de l'Internet des objets sur la première liaison de communication, la demande d'accès à liaisons multiples transportant une première quantité de dispositifs de l'Internet des objets accédant à la passerelle de périphérie ;
la plateforme de l'Internet des objets est configurée pour : déterminer, sur la base de la première quantité, une deuxième quantité de deuxièmes liaisons de communication à établir avec la passerelle de périphérie, obtenir des informations d'établissement de liaison correspondant à la deuxième quantité de deuxièmes liaisons de communication, et envoyer, à la passerelle de périphérie, les informations d'établissement de liaison correspondant à la deuxième quantité de deuxièmes liaisons de communication ;
la passerelle de périphérie est configurée pour établir l'au moins une deuxième liaison de communication avec la plate-forme de l'Internet des objets sur la base des informations d'établissement de liaison correspondant à l'au moins une deuxième liaison de communication ; et
la passerelle de périphérie est configurée pour effectuer une transmission de données avec la plate-forme de l'Internet des objets sur la première liaison de communication et la deuxième liaison de communication.

15. Support de stockage lisible par ordinateur, comprenant des instructions de programme informatique, où, lorsque les instructions de programme informatique sont exécutées par une grappe de dispositifs informatiques, la grappe de dispositifs informatiques effectue le procédé de transmission de données selon l'une quelconque des revendications 1 à 4 et/ou le procédé de transmission de données selon l'une quelconque des revendications 5 à 11.
